Europäisches Patentamt

European Patent Office

Office européen des brevets

(11) Veröffentlichungsnummer: **0 157 105**
**A2**

(12) **EUROPÄISCHE PATENTANMELDUNG**

(21) Anmeldenummer: 85101024.9

(22) Anmeldetag: 01.02.85

(51) Int. Cl.⁴: **B 60 N 1/00**

(30) Priorität: 04.02.84 DE 3403967

(43) Veröffentlichungstag der Anmeldung: 09.10.85
Patentblatt 85/41

(84) Benannte Vertragsstaaten: **AT BE FR IT SE**

(71) Anmelder: **Paul Stoessel GmbH & Co KG, Meerbuscher Strasse 64, D-4005 Meerbusch 2-Osterath (DE)**

(72) Erfinder: **Buchholz, Horst, Am Nierster Pfad 23, D-4005 Meerbusch 3 (DE)**

(74) Vertreter: **Kühnemann, Klaus et al, Patentanwälte Dipl.-Ing. Klaus Kühnemann Dr.-Ing. Karl-Ernst Müller Sonderburgstrasse 36, D-4000 Düsseldorf 11 (DE)**

(54) **Fahrzeugsitz mit Zonen verschiedener Polsternachgiebigkeiten.**

(57) Bei einem Fahrzeugsitz, vorzugsweise mit einem gegeneinander beweglichen Sitzflächen- und Rückenlehnenteil, wobei die Sitzteile aus dicht nebeneinander angeordneten materialgefüllten und in ihrer Nachgiebigkeit unterschiedlich eingestellten Kammern oder Schläuchen gebildet sind, besteht das Problem, einen entsprechenden Sitzkomfort ohne besondere Maßnahmen allein durch unterschiedliche Polsterung der Zonen herbeizuführen. Zur Lösung wird vorgeschlagen, das Sitzflächen- und Rückenlehnenteil aus mehreren, mit Polstermaterial gefüllten Kammern oder Schläuchen in besonderer Anordnung am Sitz auszubilden, welche in ihrer Nachgiebigkeit verschieden eingestellt sind.

Patentanwälte
ıg. Klaus Kühnemann
ʒ. Karl-Ernst Müller
onderburgstraße 36
4000 Düsseldorf 11
lefon (02 11) 57 55 55
okonto: Köln 794 14-501

Düsseldorf, den 30. Januar 1985
KM/sch 6

**0157105**

- 1 -

Paul Stoessel

GmbH + Co Kommanditgesellschaft

Meerbuscher Straße 64

4005 Meerbusch 2 - Osterath


B e s c h r e i b u n g


Fahrzeugsitz mit verschiedenen Zonen


Die Erfindung betrifft einen Fahrzeugsitz, vorzugsweise mit einem gegeneinander beweglichen Sitzflächen-
und Rückenlehnenteil, wobei die Sitzteile aus
dicht nebeneinander angeordneten materialgefüllten
und in ihrer Nachgiebigkeit unterschiedlich eingestellten Kammern oder Schläuchen gebildet sind.
Der Fahrzeugsitz kann in Land-, Wasser-, Luft-
oder Raumfahrzeuge eingebaut werden.

Ein Fahrzeugsitz der vorstehend genannten Gattung
ist aus der DE-OS 21 24 292 bekannt, bei welchem

0157105

mehrere Kissen aus einem offenporigen elastischen
Schaumstoff mittels entsprechender Verbindungsglieder
an einem Sitzrahmen aufgehängt und verspannt
sind, wobei mittels einer separaten Steuerung
des in dem jeweiligen Kissen herrschenden Druckes
eine unterschiedliche Nachgiebigkeit der verschiedenen Kissen in Abhängigkeit von der Sitzposition des Benutzers einstellbar ist.

Mit einem derartigen Fahrzeugsitz ist jedoch
einerseits der Nachteil verbunden, daß die Gestaltung
der Kissen selbst wie auch der Drucksteuerung
aufwendig ist und an den Benutzer auch hohe Anforderungen in der Betätigung des Fahrzeugsitzes
stellt. Weiterhin ermüdet der offenporige Schaumstoff aufgrund des ständigen Druck- und Lastwechsels,
so daß diese Art der Einstellung der Nachgiebigkeit
des Fahrzeugsitzes vergleichsweise schnell unbrauchbar wird.

Es ist ferner aus dem DE-GM 80 32 119.3 bereits
bekannt, auf einem Fahrzeugsitz aus mehreren
Kammern bestehende und mit einem Granulat gefüllte
Auflagerkissen aufzulegen, wobei ebenfalls ein
Drucksteuersystem an den Kissen für eine gesteuerte
Verdichtung des Granulats im Sinne einer Anpassung
an die Körperform des Benutzers Verwendung findet.
Auch dieser Vorschlag weist neben seinem ihm
immanenten Nachteil der fehlenden Integrierbarkeit
in einem Fahrzeugsitz den weiteren Nachteil auf,
daß mit einer derartigen Lösung zwar das Granulat
in den Kissen in eine Anpassung an die Körperformen des Insassen überführt wird, jedoch ist
eine unterschiedliche Nachgiebigkeit der Kammern
bzw. Bahnen damit nicht einstellbar.

0157105

Der Erfindung liegt daher die Aufgabe zugrunde,
einen Fahrzeugsitz der eingangs genannten Gattung
derart zu verbessern, daß einerseits trotz fehlender Bedienung und/oder Steuerung ein besonderer
Sitzkomfort geboten wird, indem die erforderliche
Seitenabstützung des Körpers bei Kurvenfahrt
gewährleistet und auch medizinische Gesichtspunkte
insofern berücksichtigt werden, als der Sitz
im Bereich der Oberschenkel-Unterseite Blutstauungen
verhindert und in dem besonders wichtigen Bereich
des Steißbeines zweckmäßige Verhältnisse schafft.
Dies gilt sowohl für Pkw-Fahrersitze als auch
für Fahrgastsitze in Omnibussen und ähnlichen
Massentransportmitteln. Andererseits besteht
ein Aufgabenteil darin, trotz der vorgenannten
anspruchsvollen Problemstellung die Herstellung
des Fahrzeugsitzes zu vereinfachen, und zwar
auch im Sinne einer Austauschbarkeit von Einheitspolsterteilen für verschiedene Sitzgestaltungen.

Die erfindungsgemäße Lösung dieser Aufgabe ergibt
sich einschließlich zweckmäßiger Ausgestaltungen
und Weiterbildungen aus dem Inhalt der Patentansprüche, welche dieser Beschreibung vorangestellt
sind.

Mit der erfindungsgemäßen Lösung ist der Vorteil
verbunden, daß die Polsterteile der Fahrzeugsitze
sowohl mit ihren verschiedenen Nachgiebigkeiten
als auch mit den verschiedensten Größen ihrer
Unterteilungen vorgefertigt und variiert werden
können, wobei auch verschiedene Polsterfüllstoffe
- unabhängig von den verschiedenen Nachgiebigkeiten -
individuell eingesetzt werden können. Der Grundgedanke der Erfindung, Kammern oder Schläuche mit ausgewählten Polstermaterialien zu füllen und in zweckbestimmter Weise zur Ausbildung einer Sitz- oder Rückenlehnenfläche gewissermaßen mosaikartig nebeneinander anzuordnen, ermöglicht praktisch eine unbegrenzte Anpaßbarkeit der Sitze in polsterungsmäßiger Hinsicht an die verschiedensten Bedürfnisse, die in Fahrzeugen aller Art auftreten mögen.

In der Zeichnung sind Ausführungsbeispiele der Erfindung wiedergegeben, die nachfolgend beschrieben werden. Es zeigen:

Fig. 1    einen PKW-Fahrer- oder Beifahrersitz in vereinfachter, schaubildlicher Darstellung,

Fig. 2    einen Querschnitt durch den Sitzflächenteil nach der Linie II - II in Fig. 1,

Fig. 3    eine Ansicht entsprechend Fig. 2, wobei drei Kammern aus zwei jeweils gemeinsamen Bahnen gebildet sind,

Fig. 4    eine Ansicht entsprechend Fig. 2 mit einer Anordnung der Schläuche zur Ausbildung eines Sportsitzes,

Fig. 5    einen Längsmittenschnitt durch den Sitz- flächenteil gemäß Fig. 1 einschl. Polster- schlauchabdeckung und Sitzbezug.

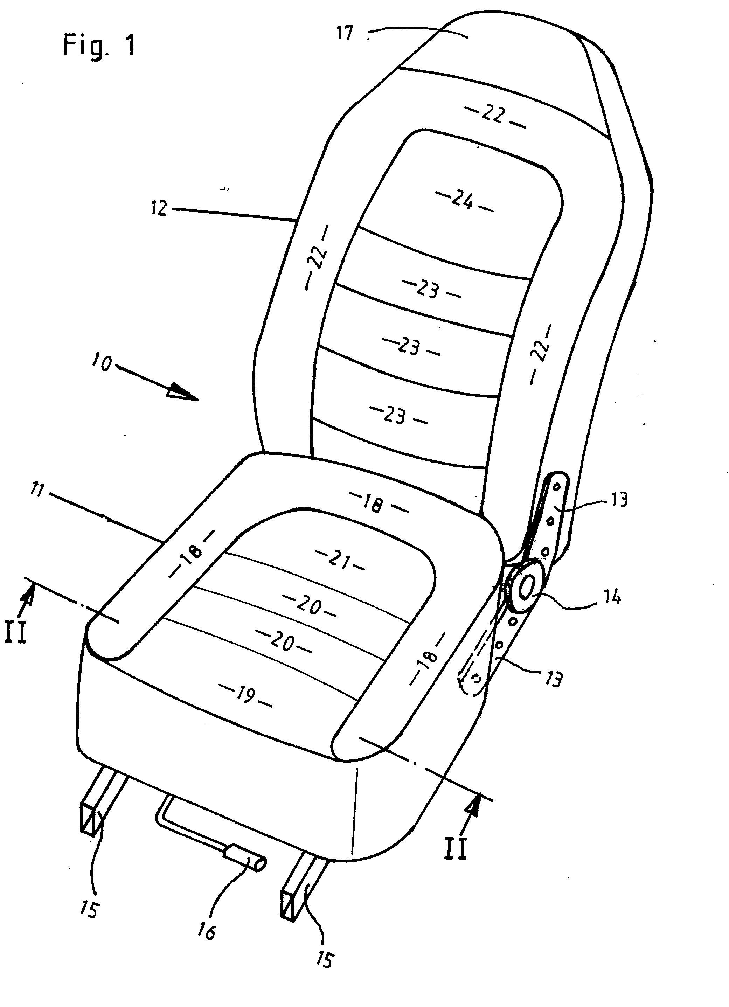

Der in Figur 1 dargestellte Kraftfahrzeugsitz 10 besteht im wesentlichen aus Sitzflächenteil 11 und Rückenlehnenteil 12, die in herkömmlicher Weise schwenkbeweglich miteinander verbunden sind. Hierzu dienen Anlenkbeschläge 13 und ein Rändelrad 14.
Der Sitzflächenteil 11 ist auf Sitzschienen 15 in
Längsrichtung des nicht dargestellten Fahrzeuges
verschiebbar; zum Einrasten der vom Sitzenden gewählten
Stellung dient ein Handhebel 16. Der Rückenlehnenteil
12 ist mit einer integrierten Kopf- und Nackenstütze
17 ausgestattet.

Sitzflächenteil 11 und Rückenlehnenteil 12 weisen
jeweils Zonen verschiedener Nachgiebigkeit auf,
d. h. die betreffenden, dem Sitzenden zugewandten
Flächen dieser beiden Teile sind in Bereiche unterteilt,
die sich beim Hinsetzen und Anlehnen sowie während
möglicher Bewegungen des Sitzenden mehr oder weniger
weit bzw. tief eindrücken. Dabei hängt das Maß des
Eindrückens nicht nur von der Form des sitzenden
Körpers ab, sondern vor allem von der Elastizität
der erwähnten Bereiche oder Zonen, welche diese
aufgrund ihrer bewußten Gestaltung und Polsterfüllstoff-Auswahl mitgeteilt bekommen haben.

Die aus Figur 1 ersichtliche Sitzfläche des Sitzflächenteils 11 hat vier Zonen von unterschiedlicher Nachgiebigkeit, nämlich eine U-förmige Außenzone 18, eine
vordere Querzone 19, eine mittlere Gesäßzone 20
und eine rückwärtige Steißzone 21. Die Außenzone
18 hat im Vergleich zu den übrigen Zonen die geringste
Nachgiebigkeit, die Zonen 19 und 21 haben abgestufte
mittlere Nachgiebigkeiten, und die Gesäßzone 20
hat die größte Nachgiebigkeit. Durch diese Kombination
von über die Sitzfläche verteilten Nachgiebigkeiten
ergeben sich ein guter Halt für die Außenseiten
der Oberschenkel der sitzenden Person nach beiden
Seiten hin sowie für die Außenseite der unteren
Rückenpartie nach hinten, weiterhin eine vergleichsweise feste Auflage für die Unterseiten der Oberschenkel
im vorderen Bereich des Sitzes, ferner eine vergleichsweise weiche Auflagerung der an die Oberschenkel
angrenzenden Gesäßpartie in der Mitte des Sitzes
und schließlich eine demgegenüber wieder festere
Unterstützung der Person in der Gegend des Steißes
und damit ein Auffangen der Wirbelsäule von unten
her.

Prinzipiell ähnlich ist der Rückenlehnenteil 12
des Sitzes 10 ausgebildet, und zwar ebenfalls mit
einer U-förmigen Außenzone 22 von vergleichsweise
geringer Nachgiebigkeit mit einer das Kreuz des
Sitzenden wirksam unterstützenden Mittel- oder
Taillenzone 23 von vergleichsweise etwas größerer
Nachgiebigkeit, mit einer oberen Rückenzone 24,
die vergleichsweise weich ist, und schließlich im
Bereich der Kopfstütze 17 mit einer Zone, deren
Nachgiebigkeit derjenigen der Taillenzone 23 gleichen
kann. Für den unmittelbaren Schulterbereich der
Person dient der obere Querteil der Außenzone 22
als Anlage, d. h. hier ist die Nachgiebigkeit wiederum
vergleichsweise besonders gering, was der Wirbelsäule am unteren Hals zugute kommt.

Die beschriebenen Zonen werden grundsätzlich durch
Kammern oder Schläuche ausgebildet, die mit geeigneten
Polstermaterialien gefüllt sind. Hierdurch ist es
möglich, die Abmessungen der Zonen und ihre Unterteilungen sehr vielfältig zu gestalten, und zwar
sowohl gerade als auch gebogen sowie in vergleichsweise sehr kleinen Unterteilungen. Beispielsweise
ist es auch möglich, innerhalb einer Fläche, die
aus mehreren Streifen gebildet ist, ein gewissermaßen
punktförmiges Element anzuordnen, um damit einen bestimmten gewünschten Effekt zu erzielen, der anatomisch bedingt oder sicherheitstechnisch zweckmäßig sein kann.

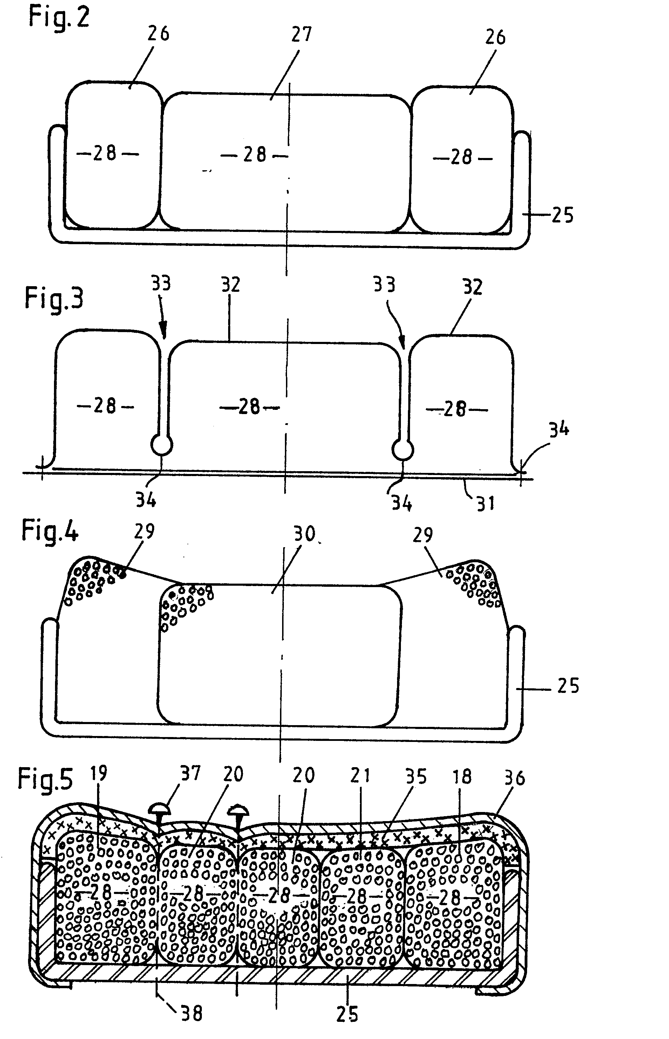

Figur 2 zeigt in vereinfachter Weise die Ansicht auf einen Querschnitt durch den Sitzflächenteil 11 gemäß Figur 1, und zwar tritt hierbei auch eine nach oben offene kastenartige Sitzschale 25 aus vorzugsweise hartem Kunststoff oder Preßholz in Erscheinung, in die die einzelnen Polsterelemente dicht an dicht gepackt eingelagert sind. Die Polsterelemente werden durch gefüllte Schläuche aus Textilgewebe, z. B. Inlett, gebildet, die im Querschnitt herstellungsmäßig aus Vereinfachungsgründen im wesentlichen kreisförmig sind und sich bei der Einlagerung in die Schale 25 ungefähr rechteckförmig verformen, wie es sich aus Figur 2 bezüglich der äußeren Schläuche 26 entnehmen läßt, welche die Zonen 18 gemäß Figur 1 darstellen. Die Schläuche werden nach den Sitzabmessungen abgelängt und an ihren offenen Stirnseiten auf geeignete Weise flachbleibend und nicht auftragend, beispielsweise durch Näharbeit oder durch Klammern verschlossen. Die Füllung der Schläuche 26 und des aus Figur 2 ebenfalls ersichtlichen Schlauches 27, welcher der Zone 19 entspricht, besteht aus geschnitzeltem Schaumkunststoff von bestimmter Menge, geeignetem Raumgewicht und entsprechender Stauchhärte, wobei grundsätzlich offenzellige oder geschlossenzellige Qualität in Frage kommt. Durch Abstimmung der spezifischen Daten des Kunststoffes, und zwar einschließlich der Schnitzelgröße und Schnitzelgestalt, können die Polstereigenschaften der Schlauchfüllungen in sehr weitgehendem Maße festgelegt und praktisch allen aktuellen Bedürfnissen angepaßt werden.

Es ist durchaus möglich, auch andere Polsterfüllstoffe, die nicht Kunststoffe sind, heranzuziehen
bzw. Kombinationen oder Mischungen von verschiedenen
Polstermaterialien vorzunehmen. Alle einschlägigen
Polstermaterial-Schlauchfüllungen sind im Rahmen dieser
Beschreibung mit der Bezugsziffer 28 bezeichnet.

Wie sich aus Figur 4 ergibt, können die einzelnen
Kammern bzw. Schläuche auch von der kreisförmigen bzw.
rechteckigen Querschnittsgestalt abweichen, um dadurch
Zonen verschiedener Höhe und/oder Oberflächenneigung
zu ergeben. Hierzu müssen die Schläuche entsprechend
zugeschnitten werden. In Figur 4 haben die die
längsseitigen Zonen 18 ausbildenden Schläuche 29
eine auf der Sitzfläche nach innen zu abfallende
Gestalt, um hierdurch eine besondere Anlage für
die Außenseite der Oberschenkel des Sitzenden herzustellen. Der vordere Querschlauch 30, welcher die
Zone 19 gemäß Figur 1 ausbildet, überdeckt die Frontseiten der Schläuche 29 teilweise, d. h. der von
der Zone 18 gemäß Figur 1 umschlossene Innenbereich
der Sitzfläche erweitert sich nach vorn hin, wodurch
den Beinen ein erweiterter Bewegungsbereich gestattet
wird. Diese Ausführung kommt insbesondere für die
Sitze von Sportfahrzeugen infrage.

Aus Figur 3 ergibt sich in schematischer Darstellungsweise eine Möglichkeit zur vereinfachten Gestaltung
mehrerer nebeneinander angeordneter Kammern für
Zonen verschiedener Nachgiebigkeit. Hier sind drei
Kammerquerschnitte abgebildet, die eine gemeinsame
untere Wandung 31 aus Textilgewebe von im wesentlichen planem Verlauf haben, über der eine für alle
drei Kammern gemeinsame obere Wandung 32 angeordnet ist. Die Wandung 32 ist mehrfach gebogen geformt,
so daß sich zwei tiefe Schlitze 33 ergeben, deren
Tiefstes mehr oder weniger bis auf die Wandung 31
hinunterreicht, so daß dort ebenso wie an den beiden
Außenkanten jeweils eine Vernähung 34 vorgenommen
werden kann. Auch hierbei ist es möglich, die Querschnittsformen der gebildeten Kammern unterschiedlich
zu gestalten, beispielsweise die äußeren Kammern
gemäß Figur 3 höher auszubilden als die innere Kammer,
die wiederum eine größere Breite als die äußeren
Kammern hat. Die Füllung der Kammern kann in gleicher
Weise wie beschrieben mit Polstermaterialien von
verschiedener Nachgiebigkeit geschehen.

Aus Figur 5 ist eine Ansicht auf einen Längsmittenschnitt durch den Sitzflächenteil 11 des Fahrzeugsitzes zu entnehmen, wobei hier auch eine beispielsweise gesteppte Abdeckmatte 35 über den verschiedenen
Schläuchen, welche die angegebenen Zonen ausbilden,
ersichtlich ist. Ein Sitzbezug 36 umhüllt das Ganze,
nämlich die Schale 25 mit den darin angeordneten
Schläuchen und der darüber verlegten Matte 35. Der
Sitzbezug 36 ist vorzugsweise aus stretchbarem Textilgewebe gefertigt, so daß sich eine stets glatte,
faltenfreie Oberfläche des Sitzes ergibt. Infolge
der nebeneinander angeordneten Schläuche und der
zwischen ihnen vorhandenen Schlitze 33 besteht die
Möglichkeit, Absteppungen oder Kapitunierungen vorzunehmen, wobei die diesbezüglichen Stoff-Fahnen
oder Zwirne von oben her durch die Schlitze 33 nach
unten geführt und dort befestigt werden können.
Dies ist in Figur 5 anhand von zwei Knöpfen 37 und
angedeuteten Stoff-Fahnen 38 dargestellt.

Durch die beschriebene Ausbildung und Anordnung
der Kammern bzw. Schläuche und ihrer Füllungen gewährleistet der Fahrzeugsitz in allen Bereichen eine
günstige Luftzirkulation, wodurch einem verstärkten
Transpirieren der sitzenden Person vorgebeut wird.
Dies gilt vor allem auch für die Längsseiten des
Sitzflächenteils 11 sowie für die Zone 19.

Es erscheint nicht ausgeschlossen, die vorstehend
beschriebene Technik des Aufbauens einer Sitz- bzw.
Rückenlehnenfläche aus individuell zusammengesetzten
Schlauchabschnitten, die mit Polstermaterial gefüllt
sind, so daß sich zonenweise verschiedene Nachgiebigkeiten ergeben, auch für Sitzmöbel im Bürobereich,
für sog. Fernsehsessel oder im Bereich der Behandlung
von Behinderten einzusetzen.

Die kastenartige Sitzschale 25 oder etwas Derartiges
ist nicht obligatorisch, d. h. sie kann auch entfallen.
Der Zusammenhalt der Schläuche geschieht dann beispielsweise durch den Bezugsstoff.

Die in der vorstehenden Beschreibung, den Patentansprüchen, der Zusammenfassung und der Zeichnung
offenbarten Merkmale des Gegenstandes dieser Unterlagen können sowohl einzeln als auch in beliebigen
Kombinationen untereinander für die Verwirklichung
der Erfindung in ihren verschiedenen Ausführungsformen
wesentlich sein.

Patentansprüche

- 11 -                                          0157105

Patentansprüche

1. Fahrzeugsitz, vorzugsweise mit einem gegeneinander
   beweglichen Sitzflächen- und Rückenlehnenteil, wobei
   die Sitzteile aus dicht nebeneinander angeordneten
   materialgefüllten und in ihrer Nachgiebigkeit unterschiedlich eingestellten Kammern oder Schläuchen
   gebildet sind, dadurch gekennzeichnet, daß der Sitzflächenteil (11) je eine äußere Längsseitenzone
   von vergleichsweise geringer Nachgiebigkeit (18),
   eine vordere Querzone von vergleichsweise mittlerer
   Nachgiebigkeit (19) und eine Innen- oder Gesäßzone
   von vergleichsweise hoher Nachgiebigkeit (20) und
   der Rückenlehnenteil (12) zwei äußere Längszonen
   von vergleichsweise geringer Nachgiebigkeit (22),
   eine obere Schulterzone von vergleichsweise hoher
   Nachgiebigkeit (24) und eine etwa die untere Hälfte
   der Rückenlehne umfassende Kreuzbeinzone von vergleichsweise mittlerer Nachgiebigkeit (23) umfaßt und daß
   die Kammern bzw. Schläuche mit Schnitzeln aus offenporigem Schaumkunststoff von bestimmter Menge sowie
   bestimmter Stauchhärte bzw. Rückstellkraft und von
   bestimmtem Raumgewicht gefüllt sind.

2. Fahrzeugsitz nach Anspruch 1, dadurch gekennzeichnet
   daß die vordere Querzone (19) mit ihrem Schlauch
   zwischen den Schläuchen der beiden Seitenzonen (18)
   angeordnet ist.

3. Fahrzeugsitz nach Anspruch 1, dadurch gekennzeichnet, daß die vordere Querzone (19) mit ihrem Schlauch den vorderen Stirnseiten der Schläuche der beiden Seitenzonen (18) wenigstens teilweise vorgelagert ist.

4. Fahrzeugsitz nach einem der Ansprüche 1 - 3, dadurch gekennzeichnet, daß die beiden seitlichen Zonen (18) an der Rückseite der Sitzfläche jeweils nach innen umbiegen und dort ineinander übergehen, so daß sich eine in Fahrtrichtung offene U-Gestalt dieser Nachgiebigkeitszone und eine entsprechende Unterstützung der Steißpartie des Sitzenden ergibt, wobei die vergleichsweise harte U-Zone (18) aus einem einzigen, entsprechend gestalteten Schlauch gebildet ist.

5. Fahrzeugsitz nach einem der Ansprüche 1 - 4, dadurch gekennzeichnet, daß der Sitzflächenteil (11) eine fünfte Zone von vergleichsweise geringer Nachgiebigkeit im Steißbereich des Sitzenden und einen entsprechend angeordneten Schlauch (21) aufweist.

6. Fahrzeugsitz nach Anspruch 5, dadurch gekennzeichnet, daß der Schlauch der fünften Zone (21) zwischen die Schläuche der anderen Zone eingelagert und die angrenzenden Schläuche formmäßig entsprechend angepaßt sind.

7. Fahrzeugsitz nach einem der Ansprüche 1 - 6, dadurch gekennzeichnet, daß die Innen- oder Gesäßzone (20) aus wenigstens zwei in Querrichtung nebeneinander angeordneten Schläuchen zusammengesetzt ist.

8. Fahrzeugsitz nach einem der Ansprüche 1 - 7, dadurch gekennzeichnet, daß die eine Fläche bildenden Kammern bzw. Schläuche mit einer abdeckenden Polsterplatte (35) von der Größe der betreffenden Gesamtfläche überzogen sind.

9. Fahrzeugsitz nach einem der Ansprüche 1 - 8, dadurch gekennzeichnet, daß der Rückenlehnenteil (12) in an sich bekannter Weise eine integrierte Kopf- und Nackenstütze (17) aufweist, die eine weitere Zone mit entsprechenden Schläuchen von vergleichsweise geringer Nachgiebigkeit bildet.

10. Fahrzeugsitz nach Anspruch 1 - 9, dadurch gekennzeichnet, daß die eine Sitz- oder Rückenlehnenfläche bildenden Schläuche jeweils gemeinsam oder insgesamt in einer offenen kastenartigen Schale (25) von fester Ausbildung eingefaßt sind.

11. Fahrzeugsitz nach wenigstens einem der vorangehenden Ansprüche, dadurch gekennzeichnet, daß in der Gesäßzone (20) des Sitzflächenteiles (11) wenigstens ein Schlauch mit einer vergleichsweise größerporigen Füllung als besondere Transpirationszone angeordnet ist.

12. Fahrzeugsitz nach Anspruch 1, dadurch gekennzeichnet, daß die Schläuche der verschiedenen Zonen wenigstens teilweise zusammenhängend ausgebildet sind, indem auf eine gemeinsame untere schlauchbildende Bahn von im wesentlichen ebener Formgebung eine gemeinsame obere schlauchbildende Bahn von im Querschnitt mehrfach ungefähr halbkreisförmig gebogener Formgebung aufgenäht ist, wobei die durch die Halbkreise gebildeten Hohlräume mit den verschiedenen Polsterstoffen gefüllt sind und sich durch die Füllungen
eine im wesentlichen geschlossene Oberfläche
zum Sitzen oder Anlehnen ergibt, die durch die
Ritzen zwischen den gebildeten Schläuchen unterteilt ist.

13. Fahrzeugsitz nach Anspruch 1, dadurch gekennzeichnet, daß die den Sitzflächen- bzw. Rückenlehnenteil gemeinsam bildenden Schläuche zusammen
von einem entsprechend geformten, insbesondere
farblich ansprechend gestalteten Bezug überzogen
sind, in dem Absteppungen, Teilungsnähte, Teilungsknöpfe o. dgl. derart angebracht sind, daß die
zugehörigen Stoff-Fahnen und/oder Zwirne in
den Schlitzen zwischen den Schläuchen verlaufen.

Zusammenfassung

Fig. 1

Fig.2

Fig.3

Fig.4

Fig.5